Europäisches Patentamt

(19) European Patent Office

Office européen des brevets

(11) Publication number : **0 347 460 B1**

(12) **EUROPEAN PATENT SPECIFICATION**

(45) Date of publication of patent specification :
12.10.94 Bulletin 94/41

(51) Int. Cl.⁵ : **G01N 27/414,** G01N 27/416

(21) Application number : **88901640.8**

(22) Date of filing : **12.02.88**

(86) International application number :
**PCT/JP88/00143**

(87) International publication number :
**WO 88/06289 25.08.88 Gazette 88/19**

(54) **ION SENSOR.**

(30) Priority : **12.02.87 JP 28330/87**

(43) Date of publication of application :
**27.12.89 Bulletin 89/52**

(45) Publication of the grant of the patent :
**12.10.94 Bulletin 94/41**

(84) Designated Contracting States :
**BE DE FR GB IT NL SE**

(56) References cited :
**EP-A- 0 228 969
JP-A- 6 221 055
JP-A-56 107 154
JP-A-61 251 764
US-A- 4 454 007
PATENT ABSTRACTS OF JAPAN ; & JP-A-62
21 055 (TERUMO CORP.) 29 January 1987**

(73) Proprietor : **TERUMO KABUSHIKI KAISHA
No. 44-1, Hatagaya 2-chome,
Shibuya-ku
Tokyo 151 (JP)**

(72) Inventor : **YAMAGUCHI, Shuichiro Terumo
Kabushiki Kaisha
2656-1, Ohbuchi
Fuji-shi
Shizuoka-ken 417 (JP)**
Inventor : **SUZUKI, Takanao Terumo Kabushiki
Kaisha
2656-1, Ohbuchi
Fuji-shi
Shizuoka-ken 417 (JP)**
Inventor : **SHIMOMURA, Takeshi Terumo
Kabushiki Kaisha
2656-1, Ohbuchi
Fuji-shi
Shizuoka-ken 417 (JP)**
Inventor : **OYAMA, Noboru
5-24, Shin-machi 3-chome
Fuchu-shi
Tokyo 183 (JP)**

(74) Representative : **Gillard, Marie-Louise et al
Cabinet Beau de Loménie
158, rue de l'Université
F-75340 Paris Cédex 07 (FR)**

EP 0 347 460 B1

**Description**

TECHNICAL FIELD

This invention relates to an ion sensor and, more particularly, to an ion sensor that uses a board on which an ion-sensitive portion is formed.

BACKGROUND ART

The inventors have filed applications for ion sensors employing a carbon electrode (in which basal plane pyrolytic graphite carbon, namely BPG carbon, glassy carbon or the like is used as the electrically conductive carbon material) as a substrate, wherein the board is coated with a redox layer which may in turn be coated with an ion-selective layer.

With ion sensors so configured, however, there is a limitation upon the shape of the board and difficulties are encountered particularly in miniaturization and in utilizing the above-described art in circuit techniques involving semiconductors and the like.

In the future, sensor techniques employing ion sensors will not be limited to systems in which mere measurements are taken by using a sensor. Since there will be a need to develop software in the electronic, electrical, biological and fermentation fields and in the field of medicine (clinical medicine, diagnosis, examination, communication, etc.), it will be required to develop sensor technology in combination with sophisticated board technology.

DISCLOSURE OF THE INVENTION

The present invention provides an ion sensor using a board on which an ion-sensitive portion is formed and which is utilizable in circuit board technology as well.

As means for solving this problem, the ion sensor of the present invention is equipped with a board on which an ion-sensitive portion is formed, a carbon layer which includes carbon coating the ion-sensitive portion, and a redox layer coating the carbon layer and exhibiting a redox function.

In this arrangement, an electric potential which corresponds to an ion concentration is produced in the ion-sensitive portion formed on the board.

In accordance with the present invention, there can be provided an ion sensor using a board on which an ion-sensitive portion is formed and which is utilizable in circuit board technology as well.

More specifically, in accordance with the present invention,

(1) ultrafine wiring can be coated with electrically conductive carbon in a simple manner, and it is possible to form the carbon board constructed of insulated wiring;

(2) the carbon board can be coated with a pin hole-free redox responsive membrane by an electro-oxidative reaction; and

(3) the ion sensor is of a composite membrane-type coated with an ion-selective membrane.

Since a printed circuit board, namely a screen-printed board or a semiconductor circuit board, can readily be coated with the abovementioned membranes, this technique can be utilized in fields that apply this sensor technology, e.g., in the electronic, electrical, biological and fermentation fields and in the field of medicine (clinical medicine, diagnosis, examination, communication, etc.).

BRIEF DESCRIPTION OF THE DRAWINGS

Fig. 1 is a prototypal view of a printed board used in a first embodiment;
Fig. 2(a) shows an electrically conductive carbon electrode of the first embodiment;
Fig. 2(b) shows a film board electrode of the first embodiment;
Fig. 3 is a view showing a circuit for measuring emf response in the first embodiment;
Fig. 4 is a view showing experimental results in the first embodiment; and
Fig. 5 is a structural view showing a handy ion sensor of a second embodiment.

BEST MODE FOR CARRYING OUT THE INVENTION

Embodiments of the present invention will now be described in detail in accordance with the accompanying drawings.

<Example 1>

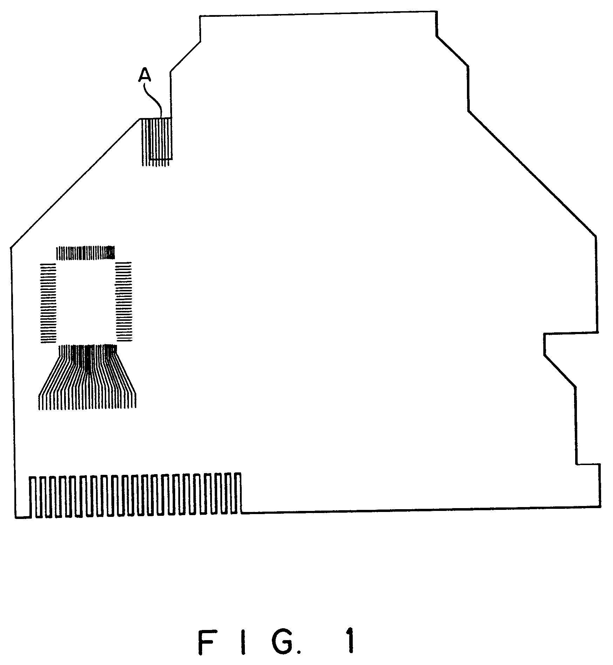

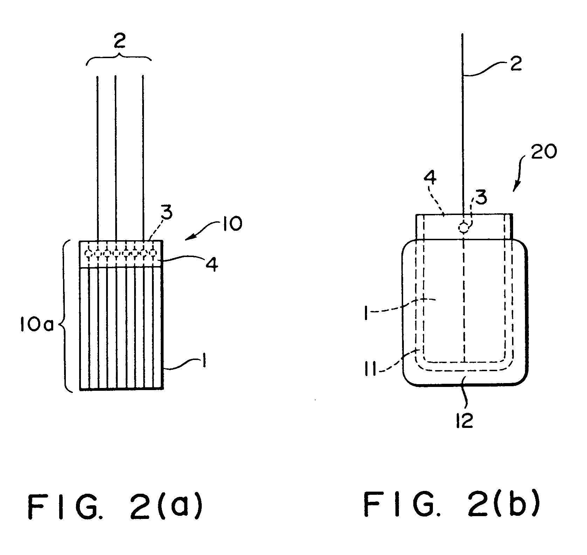

(1) As shown in Fig. 1, a board 1 was fabricated by applying, by means of a brush, a single layer (membrane thickness: about 0.5 mm) of a carbon paste (viscosity: 150 - 300$p_s$; JEF-010, manufactured by Nihon Achison K.K.) to a portion A of a board (having a wire width of 0.1 mm at fine portions, manufactured by Mitsui Kinzoku Kogyo K.K.) obtained by printing copper wiring on a polyimide film, and sintering the board for 30 min at a sintering temperature of 150°C. Next, an electrically conductive carbon electrode 10 shown in Fig. 2(a) was fabricated by joining the board 1 and urethane-coated copper wires 2 (lead wires) using solder 3, and insulating the soldered portion 3 with a silicone resin 4.

(2) A film board electrode 20 was fabricated by carrying out an electro-oxidative reaction under the conditions given below to coat a carbon-coated printed wiring portion 10a of the electrically conductive electrode 10, which was fabricated in accordance with method (1), with a redox layer 11, and coating the resulting element with a hydrogen ion carrier membrane 12.

With regard to the electro-oxidative reaction conditions, use was made of a three-pole cell in which the abovementioned electrically conductive carbon electrode 10 was employed as a working electrode, an SSCE as a reference electrode, and a platinum mesh as a counter electrode.

(Electro-oxidative reaction conditions)

| Electrolyte | 0.5 M 2,6 xylenol |
| | 0.2 M sodium perchlorate |
| | acetonitrile solvent |
| Electrolytic temperature | -20.0°C |
| Electrolytic conditions: | After the electrolytic potential was swept twice from 0 V to 1.5 V (vs. a saturated sodium calomel electrode) at a scan rate of 50 mV/sec, constant potential electrolysis was performed at 1.5 V for 10 min. |

Next, a proton carrier membrane serving as the hydrogen ion carrier membrane 12 was formed on the electrode surface by dipping under the following conditions:

(Proton carrier membrane composition)

| | | | | | |
|------|------|-----|------|-----|---|
| TDDA | 313 | mg | 6 | wt | % |
| KTpClPB | 31.3 | mg | 0.6 | wt | % |
| DOS | 3255 | mg | 62.3 | wt | % |
| PVC | 1625 | mg | 31.1 | wt | % |
| THF solution | | | | | |

<Experiment 1>

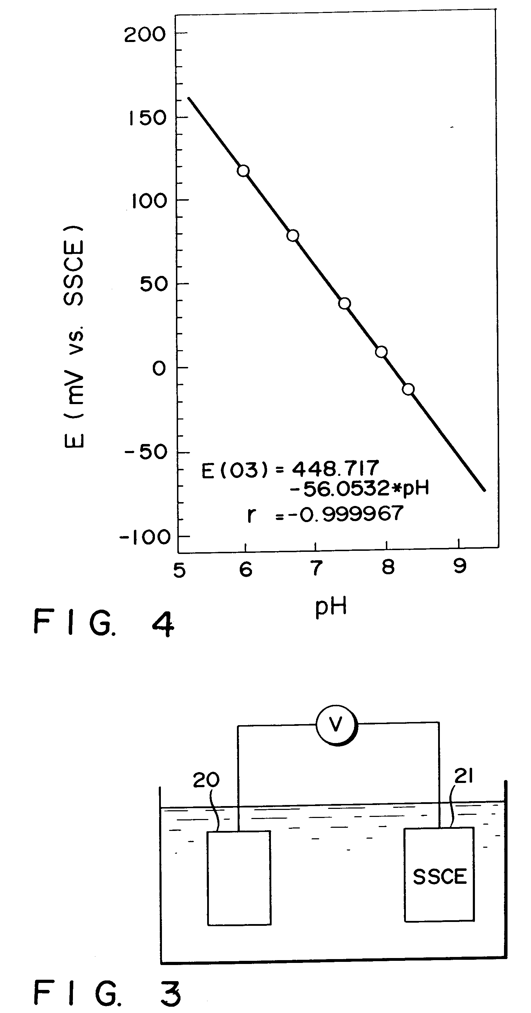

When the relationship between pH and the emf response of the film board electrode 20 was measured over a pH range of 5 - 9 in a standard buffer solution by the circuit shown in Fig. 3 using the film board electrode 20, which was prepared as described above, and an SSCE electrode 21, the results obtained showed a linear relationship, as illustrated in Fig. 4, with the slope of the straight line being 56.05 mV/pH (37°C).

Thus, there was fabricated a sensor having a high possibility of practical use as a sensor capable of pH measurement with a printed wiring film (thin membrane).

<Example 2>

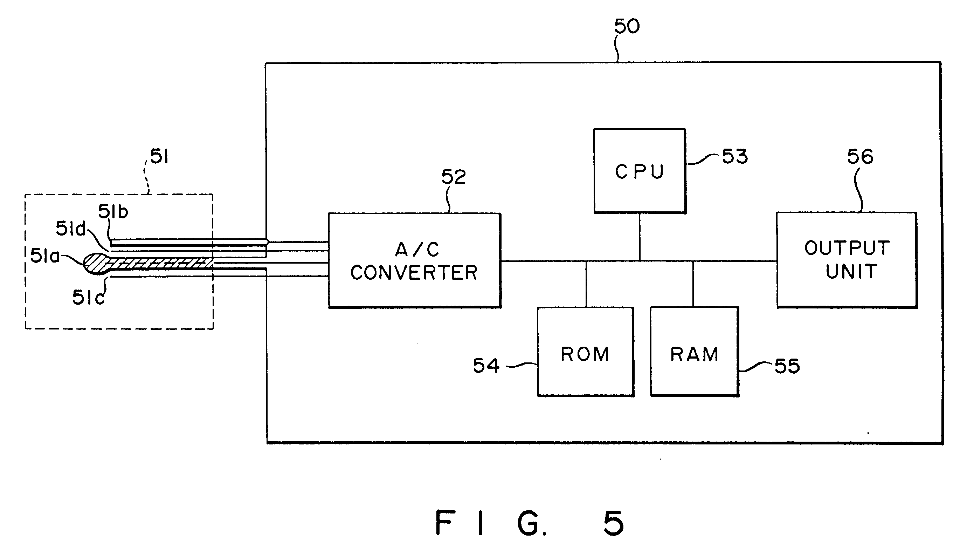

A handy-type ion sensor 50 is shown in Fig. 5.

The ion sensor 50 receives an input of various analog data from a sensor input unit 51 comprising an ion sensor electrode 51a, a reference electrode 51b, a common electrode 51c and a thermister 51d. These data are converted into digital data by an A/D converter 52. On the basis of these data and in accordance with a program stored in a ROM 54, a CPU 53 computes an ion concentration and outputs the same to an output unit

3

56 while storing data in a RAM 55.

Though a handy-type ion sensor has been described as one example, various devices which include an ion sensor can readily be fabricated on a board by the technical concept of the present invention, and an apparatus capable of measuring a plurality of ion types simultaneously can be obtained. Furthermore, the invention paves the way for application to integrated circuitry and to devices in which integrated circuits are coated with ion-selective layers.

Though a hydrogen ion carrier membrane is described as typifying the ion carrier membrane in the present embodiment, similar results can also be obtained in other ion carrier membranes for cations such as calcium ion, potassium ion, sodium ion, magnesium ion and ammonium ion, as well as for carbonate ion, chlorine ion, phosphate ion, acetate ion and sulphuric acid ion. The same is true for gas sensors for oxygen, carbon dioxide gas and the like, and for biosensors such as enzyme sensors.

Though carbon paste was used as the carbon material in the embodiments, it is also permissible to use a carbon-containing toner, a carbon-containing emulsion or a carbon-containing electrically conductive adhesive.

## Claims

1. An ion sensor characterized by having a board on which an ion-sensitive portion is formed, a burned carbon layer made by burning a material which includes carbon coating said ion-sensitive portion, and a redox layer made under electro-oxidative polymerization process coating said burned carbon layer and exhibiting a redox function.

2. An ion sensor according to claim 1, characterized in that the burned carbon layer is selected from among a carbon-containing emulsion, a carbon-containing paste, a carbon-containing toner and a carbon-containing electrically conductive adhesive.

3. An ion sensor according to claim 1, characterized in that the board, the burned carbon layer and the redox layer are each provided in pairs and a plurality of pairs are formed on the same board.

4. An ion sensor characterized by having a board on which an ion-sensitive portion is formed, a burned carbon layer made by burning a material which includes carbon coating said ion-sensitive portion, a redox layer made under electrolytic oxidative polymerization process coating said carbon layer and exhibiting a redox function, and an ion-selective layer coating said redox layer and exhibiting ion selectivity.

5. An ion sensor according to claim 4, characterized in that the burned carbon layer is selected from among a carbon-containing emulsion, a carbon-containing paste, a carbon-containing toner and a carbon-containing electrically conductive adhesive.

6. An ion sensor according to claim 4 or 5, characterized in that the board, the burned carbon layer, the redox layer and the ion-selective layer are each provided in pairs and a plurality of pairs are formed on the same board.

## Patentansprüche

1. Ionensensor, gekennzeichnet durch eine Platte, auf der ein ionenempfindlicher Bereich ausgebildet ist, eine durch Brennen eines Werkstoffs hergestellte aufgebrannte Kohlenstoffschicht einschließlich eines Kohlenstoffüberzugs über dem ionenempfindlichen Bereich und eine auf die aufgebrannte Kohlenstoffschicht aufgetragene und eine Redoxfunktion aufweisende, nach einem Elektrooxidationspolymerisationsverfahren hergestellte Redoxschicht.

2. Ionensensor nach Anspruch 1, dadurch gekennzeichnet, daß die aufgebrannte Kohlenstoffschicht aus einer kohlenstoffhaltigen Emulsion, einer kohlenstoffhaltigen Paste, einem kohlenstoffhaltigen Toner oder einem kohlenstoffhaltigen elektrisch leitenden Klebstoff hergestellt ist.

3. Ionensensor nach Anspruch 1, dadurch gekennzeichnet, daß die Platte, die aufgebrannte Kohlenstoffschicht und die Redoxschicht jeweils in Paaren vorgesehen und auf derselben Platte mehrere Paare ausgebildet sind.

**4.** Ionensensor, gekennzeichnet durch eine Platte, auf der ein ionenempfindlicher Bereich ausgebildet ist, eine durch Brennen eines Werkstoffs hergestellte aufgebrannte Kohlenstoffschicht einschließlich eines Kohlenstoffüberzugs auf dem ionenempfindlichen Bereich, eine die Kohlenstoffschicht überziehende und eine Redoxfunktion ausübende, nach einem elektrolytischen Oxidationspolymerisationsverfahren hergestellte Redoxschicht und eine auf die Redoxschicht aufgetragene und Ionenselektivität aufweisende ionenselektive Schicht.

**5.** Ionensensor nach Anspruch 4, dadurch gekennzeichnet, daß die aufgebrannte Kohlenstoffschicht aus einer kohlenstoffhaltigen Emulsion, einer kohlenstoffhaltigen Paste, einem kohlenstoffhaltigen Toner oder einem kohlenstoffhaltigen elektrisch leitenden Klebstoff hergestellt ist.

**6.** Ionensensor nach Anspruch 4 oder 5, dadurch gekennzeichnet, daß die Platte, die aufgebrannte Kohlenstoffschicht, die Redoxschicht und die ionenselektive Schicht jeweils in Paaren vorgesehen und auf derselben Platte mehrere Paare ausgebildet sind.

**Revendications**

**1.** Capteur d'ions, caractérisé en ce qu'il comporte une carte sur laquelle une partie sensible aux ions est formée, une couche de carbone brûlé, obtenue par combustion d'une matière qui contient du carbone, revêtant ladite partie sensible aux ions, et une couche redox, réalisée par un traitement de polymérisation électro-oxydante, revêtant ladite couche de carbone brûlé et présentant une fonction d'oxydation-réduction.

**2.** Capteur d'ions selon la revendication 1, caractérisé en ce que la couche de carbone brûlé est choisie parmi une émulsion contenant du carbone, une pâte contenant du carbone, un toner contenant du carbone et une colle conductrice de l'électricité contenant du carbone.

**3.** Capteur d'ions selon la revendication 1, caractérisé en ce que la carte, la couche de carbone brûlé et la couche redox sont chacune prévues par paires et en ce que plusieurs paires sont formées sur la même carte.

**4.** Capteur d'ions, caractérisé en ce qu'il comporte une carte sur laquelle une partie sensible aux ions est formée, une couche de carbone brûlé, obtenue par combustion d'une matière qui contient du carbone, revêtant ladite partie sensible aux ions, une couche redox, réalisée par un traitement de polymérisation électro-oxydante revêtant ladite couche de carbone brûlé et présentant une fonction d'oxydation-réduction, et une couche à sélectivité ionique revêtant ladite couche redox et présentant une sélectivité ionique.

**5.** Capteur d'ions selon la revendication 4, caractérisé en ce que la couche de carbone brûlé est choisie parmi une émulsion contenant du carbone, une pâte contenant du carbone, un toner contenant du carbone et une colle conductrice de l'électricité contenant du carbone.

**6.** Capteur d'ions selon la revendication 4 ou 5, caractérisé en ce que la carte, la couche de carbone brûlé et la couche redox sont chacune prévues par paires et en ce que plusieurs paires sont formées sur la même carte.

F I G. 1

FIG. 2(a)

FIG. 2(b)

E(O3) = 448.717
$-56.0532*pH$
r = -0.999967

F I G. 4

F I G. 3

F I G. 5